# EUROPÄISCHE PATENTSCHRIFT

(11) **EP 0 890 219 B1**
(45) Veröffentlichungstag und Bekanntmachung des Hinweises auf die Patenterteilung: **09.08.2000**
(21) Anmeldenummer: 97923718.7
(22) Anmeldetag: 27.03.1997
(51) Int. Cl.: H03K 5/08, H03K 17/30

(54) **SCHALTUNGSANORDNUNG ZUR REGENERATION EINES DIGITALE DATENFOLGEN ENTHALTENDEN EINGANGSSIGNALS**
CIRCUIT ARRANGEMENT FOR REGENERATING AN INPUT SIGNAL CONTAINING DIGITAL DATA SEQUENCES
MONTAGE POUR LA REGENERATION D'UN SIGNAL D'ENTREE CONTENANT DES SERIES DE DONNEES NUMERIQUES

(30) Priorität: 29.03.1996 DE 19612714
(43) Veröffentlichungstag der Anmeldung: 13.01.1999
(73) Patentinhaber: SIEMENS AKTIENGESELLSCHAFT, 80333 München (DE)
(72) Erfinder: DETERING, Volker, D-46446 Emmerich (DE)
(86) Internationale Anmeldenummer: DE9700627
(87) Internationale Veröffentlichungsnummer: WO9737429

(56) Entgegenhaltungen:
- EP-A- 0 389 124
- WO-A-94/10783
- US-A- 5 274 273

## Beschreibung

Die Erfindung betrifft eine Schaltungsanordnung, insbesondere für nach dem DECT-Standard betriebene Schnurlos-Telekommunikationsgeräte, zur Regeneration eines charakteristische, digitale Datenfolgen enthaltenden Eingangssignals.

In heutigen Datenverarbeitungsanlagen, Kommunikationsgeräten und -systemen erfolgen die Übertragung, Speicherung und Verarbeitung von Daten bzw. Informationen in zunehmendem Maße mit Hilfe der Digitaltechnik. Dabei werden Daten bzw. Informationen als Folgen von diskreten Werten dargestellt. Diese digitale Codierung beruht in den meisten Fällen auf einer Binärdarstellung, bei der der erlaubte Wertevorrat auf zwei verschiedene diskrete Werte beschränkt ist, die in der Regel als "HIGH" bzw. "1" und "LOW" bzw. "0" bezeichnet werden. Die einzelnen, jeweils einen der erlaubten Werte repräsentierenden Glieder bzw. Stellen in einer derart codierten Datenfolge bezeichnet man bei binärer Codierung als "Bits" (von engl. *binary digit*). Daneben werden jedoch auch digitale Darstellungen mit drei oder mehr verschiedenen diskreten Werten im erlaubten Wertevorrat verwendet.

Stellt man eine Folge digitaler Werte als, z.B. elektrisches, Signal dar, so ergibt sich ein Signalverlauf aus einer Folge von Signalimpulsen, die jeweils eine Stelle der zugrundeliegenden digitalen Wertefolge repräsentieren. Dabei sind im Idealfall alle denselben digitalen Wert darstellenden Impulse untereinander identisch und unterscheiden sich, z.B. in Form oder Pegelhöhe, deutlich von Impulsen, die andere digitale Werte repräsentieren. Jeder digitale Wert ist auf diese Weise umkehrbar eindeutig einer speziellen Impulsart zugeordnet.

Sehr häufig verwendet man in der Digitaltechnik eine Codierung in Form untereinander gleich langer, sog. "Rechteckimpulse", wobei jeder Impuls einen innerhalb eines Toleranzbereiches konstanten Signalpegel aufweist, dessen Höhe ihn charakterisiert. Für den Signalpegel sind dabei nur diskrete Werte erlaubt, deren Anzahl gleich der Anzahl N verschiedener Werte im zugrundeliegenden digitalen Wertevorrat ist, wobei jeder digitale Wert umkehrbar eindeutig einem der Signalpegel zugeordnet ist.

Bei der Übertragung, Speicherung oder Verarbeitung von digital codierten Daten bzw. Informationen mit Hilfe von meist elektrischen oder optischen Signalen treten in der Realität stets Störungen auf, die zu Abweichungen vom idealen Signalverlauf führen. Wenn diese Abweichungen, z.B. durch mehrmalige Übertragung eines Signals, zu groß werden, kann die zugrundeliegende digitale Wertefolge nicht mehr eindeutig aus dem Signal zurückgewonnen werden und es kommt zu Fehlfunktionen. Diesem Problem wird in der Regel begegnet, indem man die entsprechenden Signale, z.B. nach einer Übertragung über eine Übertragungsstrecke oder beim Auslesen aus einem Speicher durch entsprechende Vorrichtungen regeneriert, wobei der ursprüngliche Signalverlauf weitestgehend wiederhergestellt wird.

Aus der EP0133067A1 ist z.B. eine solche Vorrichtung zur Regeneration eines Auslesesignals von optischen Speicherdisketten bekannt, die zur Korrektur eines Auslesetaktsignals eine einem Ausleseprozessor nachgeschaltete Verformungsschaltung aufweist.

Die Regeneration digitaler Signale wird auch bei Schnurlos-Telekommunikationsgeräten, die z.B. nach dem digitalen DECT-Standard betrieben werden, eingesetzt, um die zwischen Basisstation und Mobilteil (bzw. Mobilteil und Basisstation) per Funk übertragenen Signale von dabei aufgetretenen Störungen zu befreien.

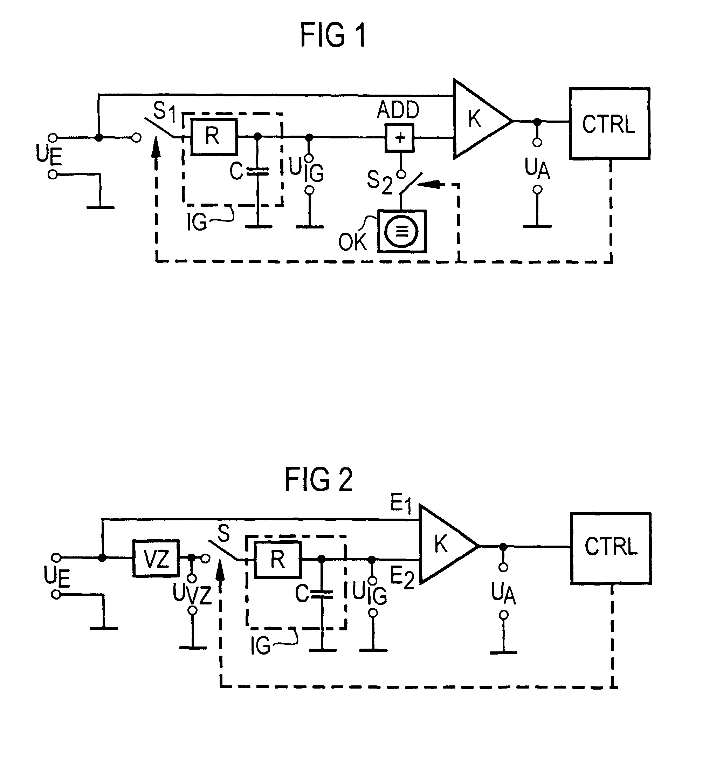

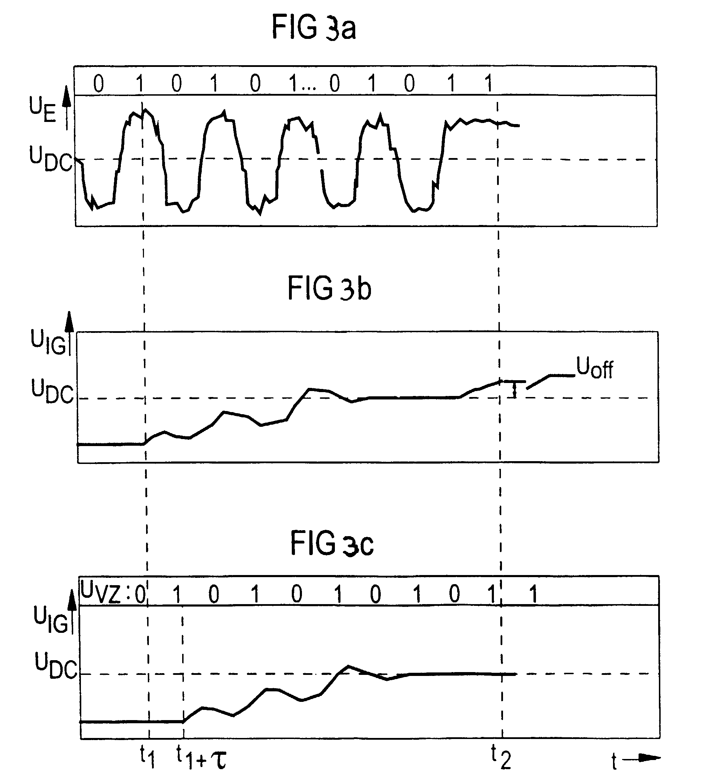

Eine entsprechende Schaltungsanordnung für DECT-Systeme - **Figur 1** - nach dem Oberbegriff des Patentanspruchs 1 ist in DE 42 36 774 C2 offenbart. Dabei wird das zu regenerierende, binär codierte Signal, im folgenden als Eingangssignal U_{E} bezeichnet, einem analogen Komparator K zugeführt, der es mit einem Referenzpegel U_{IG} vergleicht und an seinem Ausgang das in eine Folge gleich langer Rechteckimpulse mit identischer Bitstruktur regenerierte Signal U_{A} ausgibt. Der Referenzpegel U_{IG} wird durch abschnittsweise Integration des Eingangssignals U_{E} mittels eines Integrationsgliedes IG gewonnen.
Dabei wird ausgenutzt, daß gemäß dem DECT-Standard in jedem Übertragungskanal das die ersten 16 Bits eines aus 420 Bits bestehenden Übertragungsrahmens umfassende *Synchron-Einleitungswort,* das zusammen mit dem die darauffolgenden 16 Bits umfassenden *Synchron-Bestätigungswort* zur Synchronisation dient, eine charakteristische Datenfolge darstellt. Es besteht aus einer periodischen, alternierenden Bitfolge von HIGH- und LOW-Werten, die für die Übertragungsrichtung "Mobilstation-Basisstation" mit "1010..." und für die umgekehrte Übertragungsrichtung "Basisstation-Mobilstation" mit "0101..." beginnt. Die Integration eines Eingangssignals U_{E} - **Figur 3a** - erstreckt sich jeweils nur auf diese charakteristische Bitfolge und wird mit Hilfe eines durch eine Kontrollvorrichtung CTRL angesteuerten Schalters S₁ abgebrochen, wenn nach dem Synchron-Einleitungswort erstmals zwei gleiche Bitwerte aufeinanderfolgen. Dadurch ergibt sich - **Figur 3b** - ein während der Regenerierung des darauffolgenden Signalverlauf 5 stabiler Referenzpegel U_{IG} etwa in Höhe des Mittelwertes U_{DC} aus den HIGH- und LOW-Pegeln des Eingangssignals U_{E}. Von Nachteil ist bei der offenbarten Lösung jedoch, daß der erste mit dem unmittelbar vorhergehenden identische Bitwert erst dann erkannt wird, wenn bereits über den zugehörigen Signalimpuls integriert wurde, wodurch sich ein gegenüber seinem vorherigen Wert U_{DC} verschobener Referenzpegel U_{IG} ergibt. Dieser unerwünschte Offset U_{OFF} des Referenzpegels muß dann nachträglich durch eine mit einem Schalter S₂ zugeschalteten Offsetkompensationsstufe OK korrigiert werden. Die Größe des zu korrigierenden Offsets U_{OFF} ist dabei vom Pegel des Eingangssignals U_{E} abhängig.
Entsteht dieses Eingangssignal U_{E}, wie auch im Fall von DECT-Schnurlos-Übertragungen, durch Demodulation eines Funksignals, so ist die Größe des zu kompensierenden Offsets U_{OFF} vom Pegel des demodulierten Signals U_{E} und damit je nach Art der Modulation z.B. vom Amplituden- oder Frequenzhub des Senders abhängig. Dabei kann der Modulationshub eines Senders einen weiten Variationsbereich umfassen.
Zumindest bei DECT-Schnurlos-Telekommunikationsgeräten kommt noch ein weiterer Nachteil hinzu, denn die Polarität der erforderlichen Kompensation muß aufgrund der zueinander inversen Synchron-Einleitungswörter für die beiden Übertragungsrichtungen "Mobilstation-Basisstation" und "Basisstation-Mobilstation" entgegengesetzt sein.

US-A-5 274 273 offenbart eine Anordnung mit einem Komparator, einem Integrationsglied zur Durchschnittsbildung des Rauschpegels in einem Eingansssignal und einer ansteuerbaren Schaltvorrichtung. Ein Verzögerungsglied verhindert die Integration des Videosignals.

Aufgabe der vorliegenden Erfindung ist es daher, eine demgegenüber verbesserte Schaltungsanordnung zur Regeneration eines charakteristische, digitale Datenfolgen enthaltenden Eingangssignals anzugeben, bei der die genannten Nachteile vermieden werden.

Gelöst wird diese Aufgabe durch eine Schaltungsanordnung, die die im Patentanspruch 1 angegebenen Merkmale aufweist.

Die erfindungsgemäße Schaltungsanordnung zur Regeneration eines charakteristische, digitale Datenfolgen mit N>1 verschiedenen erlaubten diskreten Werten je digitaler Stelle enthaltenden Eingangssignals, umfaßt:
- Konversionsmitteln, die aus dem Vergleich des Eingangssignals mit wenigstens N-1 Referenzpegeln ein regeneriertes, digitales Ausgangssignal erzeugen,
- zumindest einem Integrationsglied zur Gewinnung der wenigstens N-1 Referenzpegel durch Integration von aus den charakteristischen Datenfolgen bestehenden Abschnitten des Eingangssignals,
- einer ansteuerbaren Schaltvorrichtung, zur Ein- bzw. Abschaltung der Integration des Eingangssignals,
- einer Kontrolleinrichtung, die jeweils durch Ansteuerung der Schaltvorrichtung zu Beginn einer charakteristischen Datenfolge im Signalverlauf den Integrationsvorgang einschaltet und, wenn das Ende der Datenfolge erkannt wird, wieder abschaltet, um ein Verschieben der wenigstens N-1 Referenzpegel zu vermeiden, sowie
- gekennzeichnet durch zumindest ein Verzögerungsglied, über das die Zuführung des Eingangssignals zu dem zumindest einem Integrationsglied gegenüber der Zuführung des Eingangssignals zu den Konversionsmitteln verzögert erfolgt, wodurch eine pegelverfälschende Integration über das Ende einer charakteristischen Datenfolge hinaus verhindert wird.

Damit werden alle mit einer Offsetkompensation verbunden Nachteile vermieden. Außerdem bedingt die Erfindung einen gegenüber der Verwendung einer Kompensationssstufe in der Regel deutlich geringeren Aufwand an Material und Kosten.

Die folgenden vorteilhaften Ausführungsformen der Erfindung sind Gegenstand der Unteransprüche.

Gemäß einer ersten Ausgestaltung der erfindungsgemäßen Schaltungsanordnung ist das zumindest eine Verzögerungsglied in Form eines RC-Glieds ausgebildet.

Alternativ kann das Verzögerungsglied nach einer zweiten Ausgestaltung der Erfindung auch in Form mehrerer in Serie geschalteter RC-Glieder ausgebildet sein, wodurch sich auch mit kostengünstigen, handelsüblichen Standardbauelementen nahezu beliebige Verzögerungszeiten einstellen lassen.

Nach einer weiteren Ausgestaltung der Erfindung sind die Konversionsmittel in Form zumindest eines analogen Komparators ausgebildet. Dabei können insbesondere bei binären Digitalsystemen kostengünstige Standardbauteile eingesetzt werden.

Bei einer vorteilhaften Weiterbildung der erfindungsgemäßen Schaltungsanordnung, wird im Fall N>2 zumindest einer der wenigstens N-1 Referenzpegel nicht direkt durch ein eigenes Integrationsglied, sondern durch Ableitung von einem anderen durch das zumindest eine Integrationsglied erzeugten Referenzpegel generiert. Dies kann z.B. mittels eines oder mehrerer Spannungsteiler geschehen. Dadurch ergibt sich zum einem eine Einsparung von Material und Platz, und zum anderen kann die Belastung des Eingangssignals durch stromziehende Integrationsglieder reduziert werden.

Nachstehend wird die Erfindung anhand eines ein DECT-Kommunikationsgerät betreffenden Ausführungsbeispiels unter Bezugnahme auf die Figuren 2 und 3 näher erläutert.

Es zeigt:
**Figur 2** eine erfindungsgemäße Schaltungsanordnung zur Regeneration eines binär codierte Daten enthaltenden Signals, insbesondere bei DECT-Systemen;
**Figur 3**
   **a)** den zeitlichen Verlauf eines zu regenerierenden Eingangssignals U_{E} am Beispiel eines DECT-Synchron-Einleitungswortes
   **b)** den daraus erzeugten Referenzpegel bei einer dem Stand der Technik entsprechenden Schaltungsanordnung nach Figur 1;
   **c)** den entsprechenden Referenzpegel bei einer erfindungsgemäßen Schaltungsanordnung nach Figur 2.

In **Figur 2** ist eine vorteilhafte Ausführungsform der erfindungsgemäßen Schaltungsanordnung für den Fall binär codierter Daten (N=2), z.B. bei einem DECT-System, beispielhaft dargestellt. Das zu regenerierende Eingangssignal U_{E} wird zum einen direkt dem nicht-invertierenden Eingang E₁ eines analogen Komparators K und zum anderen über ein Verzögerungsglied VZ einem als RC-Glied ausgebildeten Integrationsglied IG als verzögertes Signal U_{VZ} zugeführt. Der durch Integration erzeugte Referenzpegel U_{IG} liegt am zweiten Eingang E₂ des Komparators an. Der Komparator K vergleicht das Eingangssignal U_{E} mit dem Referenzpegel U_{IG} und gibt an seinem Ausgang das in eine Folge gleich langer Rechteckimpulse mit identischer Bitstruktur regenerierte Signal U_{A} aus. Eine nachgeschaltete Kontrollvorrichtung CTRL erkennt im Verlauf dieses regenerierten Signals U_{A} jeweils die für die Integration bestimmten, charakteristischen Bitfolgen, bei einem DECT-System also die Synchron-Einleitungswörter. Die Integration des Eingangssignals U_{E} zur Erzeugung des Referenzpegels U_{IG} wird auf die solche charakteristische Bitfolgen enthaltenden Signalabschnitte beschränkt, indem die Kontrollvorrichtung CTRL den Integrationsvorgang jeweils durch Ansteuerung einer Schaltvorrichtung S ein- bzw. abschaltet, wenn der Beginn bzw. das Ende einer dieser Bitfolgen erkannt wird.

Die Signalverläufe eines zu regenerierenden Eingangssignals U_{E} und des jeweils durch Integration erzeugten Referenzpegels U_{IG} sind in **Figur 3** für die beiden Schaltungsanordnung nach den Figuren 1 und 2 am Beispiel eines DECT-Synchron-Einleitungswortes dargestellt. Dabei beziehen sich die Bitfolgen in Figur 3 auf die Übertragungsrichtung "Basisstation-Mobilstation" eines DECT-Systems und die jeweilige Schaltungsanordnung kommt in der empfangenden Mobilstation zum Einsatz. Zu einem Zeitpunkt t₁ am Beginn des Synchron-Einleitungswortes im Eingangssignal U_{E} wird der Schalter S (bzw. S₁ in Fig.1) geschlossen. Anders als bei der Schaltung nach Figur 1, bei der das Eingangssignal U_{E} direkt und bereits ab dem Zeitpunkt t₁ integriert wird, erfolgt bei der erfindungsgemäßen Schaltung nach Figur 2 eine Integration des durch das Verzögerungsglied VZ um die Zeitspanne τ gegenüber U_{E} verzögerten Signals U_{VZ}. Im Laufe des jeweiligen Integrationsvorgangs baut sich dann der Referenzpegel U_{IG} in beiden Fällen bis zu einem Sättigungswert U_{DC} etwa in Höhe des Mittelwertes aus den HIGH- und LOW-Werten des Eingangssignals U_{E} auf. Das Ende des Synchron-Einleitungswortes wird von der Kontrolleinrichtung CTRL erkannt, wenn sie zum Zeitpunkt t₂ erstmals ein Bit empfängt, daß den gleichen Wert wie das unmittelbar vorhergehende aufweist. Bei der Schaltung nach Figur 1 fließt dieses Bit jedoch noch in die Integration ein und führt dabei zu einem unerwünschten Offset U_{OFF} beim Referenzpegel U_{IG}, bevor die Integration bei t₂ abgebrochen wird. Dagegen liegt das genannte Bit bei der erfindungsgemäßen Schaltung nach Figur 2 zum Zeitpunkt t₂ noch gar nicht am Integrationsglied IG an, wenn die Kontrolleinrichtung CTRL durch entsprechende Ansteuerung des Schalters S die Integration beendet. Die gewünschte Pegelhöhe U_{DC} des Referenzpegels U_{IG} bleibt daher erhalten, und eine Offsetkorrektur erübrigt sich.

## Patentansprüche

1. Schaltungsanordnung, insbesondere bei DECT-Systemen, zur Regeneration eines charakteristische, digitale Datenfolgen mit N>1 verschiedenen erlaubten diskreten Werten je digitaler Stelle enthaltenden Eingangssignals (U_{E}), mit
- Konversionsmitteln (K), die aus dem Vergleich des Eingangssignals (U_{E}) mit wenigstens N-1 Referenzpegeln (U_{IGN}) ein regeneriertes, digitales Ausgangssignal (U_{A}) erzeugen,
- zumindest einem Integrationsglied (IG) zur Gewinnung der wenigstens N-1 Referenzpegel (U_{DCN}) durch Integration von aus den charakteristischen Datenfolgen bestehenden Abschnitten des Eingangssignals (U_{E}),
- einer ansteuerbaren Schaltvorrichtung (S), zur Ein- bzw. Abschaltung der Integration des Eingangssignals (U_{E}),
- einer Kontrolleinrichtung (CTRL), die jeweils durch Ansteuerung der Schaltvorrichtung (S) zu Beginn einer charakteristischen Datenfolge im Signalverlauf den Integrationsvorgang einschaltet und, wenn das Ende der Datenfolge erkannt wird, wieder abschaltet, um ein Verschieben der wenigstens N-1 Referenzpegel (U_{DCN}) zu vermeiden, sowie
- gekennzeichnet durch zumindest ein Verzögerungsglied (VZ), über das die Zuführung des Eingangssignals (U_{E}) zu dem zumindest einem Integrationsglied (IG) gegenüber der Zuführung des Eingangssignals (U_{E}) zu den Konversionsmitteln (K) verzögert erfolgt, wodurch eine pegelverfälschende Integration über das Ende einer charakteristischen Datenfolge hinaus verhindert wird.

2. Schaltungsanordnung nach Anspruch 1,
**dadurch gekennzeichnet,**
daß das zumindest eine Verzögerungsglied (VZ) in Form eines RC-Glieds (RC) ausgebildet ist.

3. Schaltungsanordnung nach Anspruch 1,
**dadurch gekennzeichnet,**
daß das zumindest eine Verzögerungsglied (VZ) in Form mehrerer in Serie geschalteter RC-Glieder (RC) ausgebildet ist.

4. Schaltungsanordnung nach einem der vorhergehenden Ansprüche,
**dadurch gekennzeichnet,**
daß die Konversionsmittel (K) in Form zumindest eines analogen Komparators ausgebildet sind.

5. Schaltungsanordnung nach einem der vorhergehenden Ansprüche,
**dadurch gekennzeichnet,**
daß im Fall N>2 zumindest einer der wenigstens N-1 Referenzpegel nicht direkt durch ein eigenes Integrationsglied, sondern durch Ableitung von einem anderen durch das zumindest eine Integrationsglied erzeugten Referenzpegel generiert wird.

## Claims

1. Circuit arrangement, in particular in DECT systems, for regenerating an input signal (U_{E}) which contains characteristic digital data sequences with N>1 different permitted discrete values per digital place, with
- conversion means (K) which generate a regenerated digital output signal (U_{A}) from the comparison of the input signal (U_{E}) with at least N-1 reference levels (U_{IGN}),
- at least one integration element (IG) for acquiring the at least N-1 reference levels (U_{DCN}) by integrating sections of the input signal (U_{E}) which consist of the characteristic data sequences,
- a switching device (S) which can be actuated, for switching on and off the integration of the input signal (U_{E}),
- a monitoring device (CTRL) which switches on the integration procedure by respectively actuating the switching device (S) at the start of a characteristic data sequence in the signal profile and switches it off again when the end of the data sequence is detected in order to avoid the at least N-1 reference levels (U_{DCN}) being displaced, and characterized by
- at least one delay element (VZ) by means of which the feeding of the input signal (U_{E}) to the at least one integration element (IG) is delayed with respect to the feeding of the input signal (U_{E}) to the conversion means (K), as a result of which a level-falsifying integration beyond the end of a characteristic data sequence is prevented.

2. Circuit arrangement according to Claim 1, characterized in that the at least one delay element (VZ) is embodied in the form of an RC element (RC).

3. Circuit arrangement according to Claim 1, characterized in that the at least one delay element (VZ) is embodied in the form of a plurality of RC elements (RC) connected in series.

4. Circuit arrangement according to one of the preceding claims, characterized in that the conversion means (K) are embodied in the form of at least one analogue comparator.

5. Circuit arrangement according to one of the preceding claims, characterized in that if N>2, at least one of the at least N-1 reference levels is not generated directly by its own integration element but rather by derivation from another reference level generated by the at least one integration element.

## Revendications

1. Montage, en particulier pour les systèmes DECT, pour la régénération d'un signal d'entrée (U_{E}) contenant des séries caractéristiques de données numériques avec, par position numérique, N > 1 différentes valeurs discrètes autorisées avec:
- des moyens de conversion (K) qui produisent, à partir de la comparaison du signal d'entrée (U_{E}) avec au moins N - 1 niveaux de référence (U_{IGN}), un signal de sortie numérique régénéré (U_{A}),
- au moins un élément intégrateur (IG) pour générer au moins les N - 1 niveaux de référence (U_{DCN}) par intégration de parties du signal d'entrée (U_{E}) composées de séries caractéristiques de données,
- un dispositif de commutation (S), qui peut être commandé, pour la mise en circuit et hors circuit de l'intégration du signal d'entrée (U_{E}),
- un dispositif de contrôle (CTRL), qui met le processus d'intégration en circuit par excitation du dispositif de commutation (S) au début d'une série de données caractéristique dans le cours du signal et qui le remet hors circuit, quand la fin de la série de données est détectée, pour éviter un décalage des au moins N - 1 niveaux de référence (U_{DCN}) et
- caractérisé par au moins un élément de temporisation (VZ), grâce auquel l'application du signal d'entrée (U_{E}) sur le au moins un élément intégrateur (IG) est retardée par rapport à l'application du signal d'entrée (U_{E}) sur les moyens de conversion (K), ce qui évite une intégration, qui fausse le niveau, au-delà de la fin d'une série de données caractéristique.

2. Montage selon la revendication 1
**caractérisé par le fait**
que le dit au moins un élément de temporisation (VZ) est conçu sous forme d'une combinaison résistance-capacité (RC).

3. Montage selon la revendication 1
**caractérisé par le fait**
que le dit au moins un élément de temporisation (VZ) est conçu sous forme de plusieurs combinaisons résistance-capacité (RC) montés en série.

4. Montage selon l'une des revendication précédentes
**caractérisé par le fait**
que les moyens de conversion (K) sont conçus sous forme d'au moins un comparateur analogique.

5. Montage selon l'une des revendication précédentes
**caractérisé par le fait**
que, dans le cas N > 2, au moins un des au moins N - 1 niveaux de référence n'est pas généré directement par un élément intégrateur intrinsèque, mais par dérivation à partir d'un autre niveau de référence produit par le dit au moins un élément intégrateur.
